(19)

(11) **EP 2 686 812 B1**

(12) **EUROPÄISCHE PATENTSCHRIFT**

(45) Veröffentlichungstag und Bekanntmachung des Hinweises auf die Patenterteilung:
**12.02.2020 Patentblatt 2020/07**

(21) Anmeldenummer: **12715624.8**

(22) Anmeldetag: **16.03.2012**

(51) Int Cl.:
***G06K 19/077*** *(2006.01)*

(86) Internationale Anmeldenummer:
**PCT/EP2012/054735**

(87) Internationale Veröffentlichungsnummer:
**WO 2012/126861 (27.09.2012 Gazette 2012/39)**

(54) **RFID-VORRICHTUNG UND DAMIT VERSEHENE LADEBRÜCKE**

RFID DEVICE AND THEREWITH EQUIPEED LOADING BRIDGE

INSTALLATION-RFID ET PONT DE CHARGEMENT EQUIPE D'UNE TELLE INSTALLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2011 DE 102011014422**
**29.04.2011 DE 102011100020**
**29.04.2011 DE 102011100046**
**04.08.2011 DE 102011114736**

(43) Veröffentlichungstag der Anmeldung:
**22.01.2014 Patentblatt 2014/04**

(73) Patentinhaber: **Hörmann KG Antriebstechnik**
**33803 Steinhagen (DE)**

(72) Erfinder:
- **BIERHENKE, Rüdiger**
**32657 Lemgo (DE)**
- **BOLLENBACHER, Helmut**
**56154 Boppard-Buchholz (DE)**

(74) Vertreter: **Kastel, Stefan et al**
**Kastel Patentanwälte**
**St.-Cajetan-Straße 41**
**81669 München (DE)**

(56) Entgegenhaltungen:
**EP-A1- 1 308 883**
**EP-A1- 1 376 463**
**DE-A1-102009 006 977**
**US-A1- 2006 158 334**
**US-B1- 7 605 688**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 686 812 B1

Printed by Jouve, 75001 PARIS (FR)

## Beschreibung

Die Erfindung betrifft eine RFID-Vorrichtung, insbesondere zur Nutzung in der Logistik. Weiter betrifft die Erfindung eine mit einer solchen RFID-Vorrichtung versehene Ladebrücke oder Laderampe.

Aus der DE 10 2009 006 977 A1 ist ein RFID-Transponder zur Übertragung von Positionsdaten an ein Kraftfahrzeug bekannt. Der RFID-Transponder ist in der Straße oder der Fahrbahn angeordnet und eingebettet in eine gummielastische Masse oder in ein elektrisch nicht abschirmendes Gehäuse. Der RFID-Transponder dient zur Verwendung in einem Spurhalteassistenzsystem oder zur Korrektur von Daten eines bordeigenen Navigationssystems oder als Einparkhilfe für das Kraftfahrzeug. Hierzu ist das Kraftfahrzeug mit einer RFID-Sende- und/oder Empfangseinheit versehen, die den jeweils in der Straße eingebetteten RFID-Transponder beim Überfahren erfassen kann und die Daten auslesen kann.

Auch bei der US 7 605 688 B ist eine aktive RFID-Sende- und Empfangseinheit in einem Fahrzeug angebracht, wobei passive RFID-Transponder ortsfest in der Umgebung, insbesondere auf einem Flugfeld eines Flughafens, angebracht sind. Auch hier dienen die passiven RFID-Transponder zur Positionsbestimmung, so dass ein Pilot die Position seines Flugzeuges auf dem Flughafengelände erfassen kann.

Aus der EP 1 379 463 A1 ist es bekannt, einen RFID-Transponder in einer Kavität eines Metallgegenstandes unterzubringen, wobei ein Schlitz vorgesehen ist, um elektromagnetische Felder durch eine Metalloberfläche zu einer Antenne des Transponders durchzulassen.

Aus der EP 1 308 883 A1 ist ein RFID-Transponder bekannt, der beispielsweise zur Kennzeichnung einer metallenen Gasflasche als Ware oder zur Kennzeichnung eines Notebooks als Ware dient und in einem Gehäuse aus Metall untergebracht ist. Das Gehäuse weist einen Pfad für RFID-Signale auf. Auch hier handelt es sich bei dem RFID-Transponder um einen passiven RFID-Transponder, der durch eine externe RFID-Sende- und/oder Empfangseinheit als Lesegerät ausgelesen werden kann.

Viele Handelsunternehmen akzeptieren nur noch Warenanlieferungen, die mit RFID-Transpondern wie z.B. RFID-Chips gekennzeichnet sind. Dadurch kann man die gesamte Logistikkette vollständig automatisieren. Geht die Warenkennzeichnung über Barcodes, muss die Ware jedoch abgesetzt werden und der Barcode muss eingelesen werden. Bei RFID-Transpondern kann das Einlesen automatisch erfolgen.

Es ist beispielsweise bereits bekannt, RFID-Transponder zur Überwachung der Kühlkette einzusetzen.

Nun werden die meisten Warenlieferungen heutzutage immer noch über Paletten geliefert. Die RFID-Transponder befinden sich an der Palette.

Es ist wünschenswert, Transportwege, wie z.B. Ladestellen oder Ladedocks, oder Fahrwege zur Verteilung von Gütern innerhalb von Bauwerken oder auf einem Firmengelände, oder Transportbehälter wie z.B. Container oder dergleichen mit RFID-Antennen zu versehen, so dass das Passieren eines RFID-Transponder über diesen Transportweg oder in den bzw. aus dem Transportbehälter automatisch erfassbar ist. Dadurch kann man erfassen, über welchen Transportweg zu welcher Zeit welcher RFID-Chip eingegangen oder ausgegangen ist oder man kann den Inhalt eines Transportbehälters überwachen. Hierüber kann man beispielsweise eine Lieferung identifizieren. Auch kann man diese Information zum automatischen Verbuchen von Warenein- oder ausgängen sowie zur Transportüberwachung verwenden.

Eine umfassende Darstellung von RFID-Anwendungen in der Logistik sowie der hierzu eingesetzten Techniken findet sich z.B. in Lenzbauer, S. - RFID-Anwendungen in der Logistik, Diplomarbeit an der Wirtschaftuniversität Wien, Schriftenreihe des Instituts für Transportwirtschaft und Logistik, Nr. 2, (2007 LOG), veröffentlicht 2007 online via ePub, http://epub.wu-wien.ac.at, hier als Teil der Offenbarung beigefügt.

In der Logistik wie z.B. bei Ladestellen oder bei anderen Bauwerkszugängen oder im Bereich von Transportbehältern oder auf Schiffen, wo ein Warentransport stattfindet, sind die Fahrwege, Durchgänge oder Behälter oder Transportfahrzeuge oft rauen Betriebsbedingungen unterworfen. Beispielsweise fahren Transportfahrzeuge wie Lastkraftwagen bis in den Kontakt mit dem Bauwerk und mit der Bauwerkszugangsvorrichtung hinein. Beim Transport von Waren oder Gütern stoßen oft Transportfahrzeuge oder die Waren an Begrenzungen an. Container werden sehr eng gestapelt, so dass es zwangsweise zu Berührungen untereinander kommt. Die Transportmittel und die Transportwege sowie deren Begrenzungen müssen daher für hohe Belastungen ausgebildet sein; beispielsweise sollen auch voll beladene Flurförderfahrzeuge über die Durchgangswege fahren können. Waren werden zudem oft auf Paletten transportiert, die zum Teil tonnenschwer sind. Diesen Lasten müssen die Transportmittel und Transportwege standhalten.

Es ist daher wünschenswert, dass solche Transportmittel sowie Transportwegbegrenzungen sehr robust ausgebildet sind. In der Regel werden daher für die Herstellung solche Transportmittel und Transportwege Metalle, wie beispielsweise Stahlblech oder Stahlplatten, verwendet.

Andererseits soll an Transportmitteln oder Transportwegen eine möglichst genaue Erfassung von mit RFID-Transpondern gekennzeichneten Waren oder Gütern erfolgen. Daher werden im Bereich solcher Transportmittel und Transportwege aufwändig RFID-Sende- oder Empfangseinrichtungen installiert, die gegenüber den rauen Betriebsbedingungen geschützt werden müssen und insbesondere gegenüber Stößen geschützt werden müssen.

Hinsichtlich der Erfassung von RFID-Transponder sind die bisherigen RFID-Sende- oder Empfangseinrichtungsanordnungen nicht optimal. Es gibt insbesondere Probleme beim Erfassen von metallischen Waren, von Transportbehältern mit flüssigen Materialien, die abschirmend für RFID-Signale wirken, sowie von in Gitterboxen transportierten Waren. Die Erfassung solcher Waren macht auch dann Probleme, wenn ein RFID-Transponder an einer Palette zum Transport solcher Waren angebracht ist.

Zum Beispiel ist aus der US 2006/0158334 A1 eine Vorrichtung für einen RFID-Leser bekannt, mit einer Antenne zum Empfang eines RFID-Signals, das von einem Objekt übertragen wird, und zur Ausgabe des RFID-Signals an den RFID-Leser. Auf dem Eingang eines Gebäudes befindet sich eine Metallplatteneinheit, wobei die Metallplatteneinheit und das Objekt auf gegenüberliegenden Seiten der Antenne platziert sind. Die Kombination der Antenne mit den Metallplatten schafft ein Antennenübertragungssystem mit einer erhöhten Signalstärke. Die Objekte sind zum Beispiel Waren, die mit einem RFID-Tag versehen sind und den Gebäudeeingang passieren.

Dabei besteht jedoch das oben genannte Problem, dass die Antenne zum Empfang des RFID-Signals bei Kollisionen sehr schwerer Waren mit einer Transportwegbegrenzung beschädigt wird.

Es ist daher die Aufgabe der Erfindung, eine für Anwendungen in der Logistik optimierte RFID-Vorrichtung zu schaffen, die gegen Beschädigungen durch Kollisionen schwerer Waren oder Paletten mit den Transportwegbegrenzungen geschützt ist und dennoch einen zuverlässigen Empfang des RFID-Signals bietet.

Diese Aufgabe wird durch eine RFID-Vorrichtung nach Anspruch 1 gelöst.

Vorteilhafte Ausgestaltungen der Erfindung sind Gegenstand der Unteransprüche.

Die Erfindung schafft eine RFID-Vorrichtung zur Erfassung von mit RFID-Transpondern gekennzeichneten Gegenständen an einem Transportweg für die Gegenstände, mit einer RFID-Sende- und/oder Empfangseinheit zur Erfassung der RFID-Transponder mittels einer RFID-Antenne, so dass das Passieren eines RFID-Transponders über den Transportweg automatisch erfassbar ist, und einem Metallbereich, wobei der an dem Transportweg anzuordnende Metallbereich mit einem Signaldurchlassbereich zum Durchlassen von RFID-Signalen durch den Metallbereich versehen ist, und die RFID-Sende- und/oder Empfangseinheit auf einer dem Transportweg abzuwendenden Seite des Metallbereichs angeordnet ist.

Bei einer erfindungsgemäßen Anordnung ist ein Metallbereich zwischen der RFID-Einheit und dem Transportweg vorgesehen. Dadurch ist die RFID-Einheit besonders gut geschützt.

Vorteilhafterweise wird als Metallbereich ein ohnehin im oder am Transportweg zu findendes Metallelement genutzt wie beispielsweise eine metallische Bodenplatte, eine metallische Begrenzung, eine metallische Wandung oder dergleichen. Z.B. könnte die RFID-Einheit in einer Containerwandung untergebracht sein, die mit dem Signaldurchlassbereich versehen ist.

Besonders bevorzugt ist vorgesehen, dass der Metallbereich durch eine Metallplatte und/oder eine Bodenplatte gebildet ist. Vorzugsweise ist eine RFID-Erfassung von unten vorgesehen. Dadurch können besonders gut mit RFID gekennzeichnete Paletten erfasst werden und zwar auch dann, wenn darauf Waren oder Verpackungen transportiert werden, die für die RFID-Signale undurchdringlich sind.

Besonders bevorzugt ist vorgesehen, dass der Metallbereich Teil einer Tragkonstruktion ist, über welche der Transportweg führt, wobei die RFID-Sende- und/oder Empfangseinheit unter dem Metallbereich angeordnet ist. Vorzugsweise wird eine ohnehin vorhandene Metallkonstruktion als Aufnahme für die RFID-Einheit verwendet. Diese ist besonders geschützt, es sind keine den Transport störende Aufbauten notwendig. Zusätzlich lässt sich die bevorzugte Erfassung von unten erreichen.

Besonders bevorzugt ist vorgesehen, dass der Signaldurchlassbereich wenigstens einen Schlitz in dem Metallbereich aufweist. Eine Schlitzgeometrie ist als Durchlassbereich besonders bevorzugt, da mit einer solchen Schlitzgeometrie insbesondere eine Signaldurchlassung bei möglichst geringer Schwächung des Metallbereichs erzielbar ist.

Besonders bevorzugt ist vorgesehen, dass der Signaldurchlassbereich eine Schlitzkombination aus einer Mehrzahl von Schlitzen aufweist.

Besonders bevorzugt ist vorgesehen, dass die Schlitzkombination ungeradzahlige Anzahl von Schlitzen aufweist und vorzugsweise drei Schlitze aufweist.

Besonders bevorzugt weist der Signaldurchlassbereich eine Durchgangsöffnung in dem Metallbereich auf, deren größte Innenweite kleiner als die Hälfte der Wellenlänge der RFID-Signale ist, für die die RFID-Sende- und/oder Empfangseinheit ausgelegt ist.

Besonders bevorzugt ist daher vorgesehen, dass der wenigstens eine Schlitz eine sich in Längsrichtung des erstreckende Schlitzlänge aufweist, die kleiner als die halbe Wellenlänge der RFID-Signale der RFID-Sende- und/oder Empfangseinheit ist. Ein Schlitz der bezogen auf die Wellenlänge eine genügend kurze Schlitzlänge aufweist, verhält sich nach dem Huygens'schen Prinzip als Sekundärstrahler, der sich durch die RFID-Einheit als Primärstrahler zum Abstrahlen der RFID-Signale anregen lässt. Damit lässt sich ein guter Signaldurchgang bei geringer mechanischer Schwächung des Metallbereichs erreichen.

Besonders bevorzugt ist vorgesehen, dass der wenigstens eine Schlitz eine Schlitzlänge von ca. 100 mm bis ca. 180 mm hat und vorzugsweise eine Schlitzbreite von ca. 1 mm bis ca. 20 mm hat.

Besonders bevorzugt ist vorgesehen, dass der wenigstens eine Schlitz mit einem dielektrischen Material verfüllt ist. Durch eine Verfüllung lässt sich vermeiden, dass Schmutz oder sonstiges Material durch den Signaldurchlassbereich dringen. Dieser ist nur für Signale, nicht aber für Materie durchlässig.

Besonders bevorzugt ist vorgesehen, dass auf der dem Transportweg abzuwendenden Seite des Metallbereichs eine RFID-Antenne, insbesondere eine Patch-Antenne oder eine Dipol-Antenne, mit vorbestimmten Abstand zu dem Metallbereich und in Überdeckung mit dem Signaldurchlassbereich mittels einer Befestigungsvorrichtung angeordnet ist.

Bevorzugt ist vorgesehen, dass die Dipol-Antenne im Wesentlichen quer zu dem wenigstens einen Schlitz angeordnet ist.

Besonders bevorzugt ist vorgesehen, dass der Signaldurchlassbereich mit einem Verstärkungselement verstärkt ist. Damit lässt sich selbst bei hoher Punktbelastung auf den Signaldurchlassbereich ein Durchbruch des Metallbereichs vermeiden.

Besonders bevorzugt ist vorgesehen, dass das Verstärkungselement ein auf der dem Transportweg abzuwendenden Seite auf den Metallbereich befestigtes, insbesondere aufgeschweißtes, Metallplattenelement mit einer der Schlitzkombination des Metallbereichs entsprechenden Schlitzkombination hat.

Besonders bevorzugt ist vorgesehen, dass der Metallbereich als Boden oder als Teil eines Bodens des Transportwegs und insbesondere als Fahrweg für Fahrzeuge, insbesondere Flurförderfahrzeuge, ausgebildet ist.

Die Erfindung betrifft gemäß einem weiteren Aspekt davon eine mit einer solchen RFID-Vorrichtung versehene Ladestelle, Ladebrücke oder Laderampe, die den Metallbereich bildet oder aufweist.

Ausführungsbeispiele der Erfindung werden nachfolgend anhand der beigefügten Zeichnungen näher erläutert. Darin zeigt:

| | |
|---|---|
| Fig. 1 | eine seitliche perspektivische Darstellung eines Transportweges in der Logistik am Beispiel einer Bodenplatte, die von einem Flurförderfahrzeug mit einer RFID-gekennzeichneten Palette überfahren wird; |
| Fig. 2 | eine perspektivische Draufsicht auf die Bodenplatte von Fig. 1; |
| Fig. 3 | eine Detailansicht der Bodenplatte von Fig. 2; |
| Fig. 4 | eine Darstellung auf eine Schlitzkombination bei einer Bodenplatte mit drei Schlitzen von unten; |
| Fig. 5 | eine perspektivische Darstellung einer Euro-Palette mit RFID-Kennung; |
| Fig. 6 | eine Prinzipdarstellung einer beladenen Palette mit RFID; |
| Fig. 7 | eine Prinzipdarstellung einer Erfassung einer beladenen Palette mit einer Bodenantenne; |
| Fig. 8 bis Fig. 12 | unterschiedliche Ausführungsformen von Schlitzanordnungen in schematischer Darstellung; |
| Fig. 13 | eine schematische Darstellung einer ersten Ausführungsform einer Antenne einer RFID-Sende- und/oder Empfangseinrichtung; |
| Fig. 14 | eine schematische Darstellung einer zweiten Ausführungsform einer Antenne; |
| Fig. 15 | eine schematische Darstellung eines Erfassungsbereiches einer hinter einem Metallbereich angeordneten RFID-Antenne; |
| Fig. 16 | eine schematische Darstellung einer Bodenplatte von unten mit drei Antennen; |
| Fig. 17 | eine schematische Darstellung einer Anordnung zum Auffinden einer geeigneten Position der Antenne; |
| Fig. 18 | eine schematische Darstellung des Empfangsbereiches einer unterhalb einer Ladebrücke angeordneten Antenne bei der praktischen Erfassungen von Paletten; und |
| Fig. 19 | eine perspektivische Darstellung der Anordnung von Antenne und Schlitzkombination mit einem Verstärkungselement. |

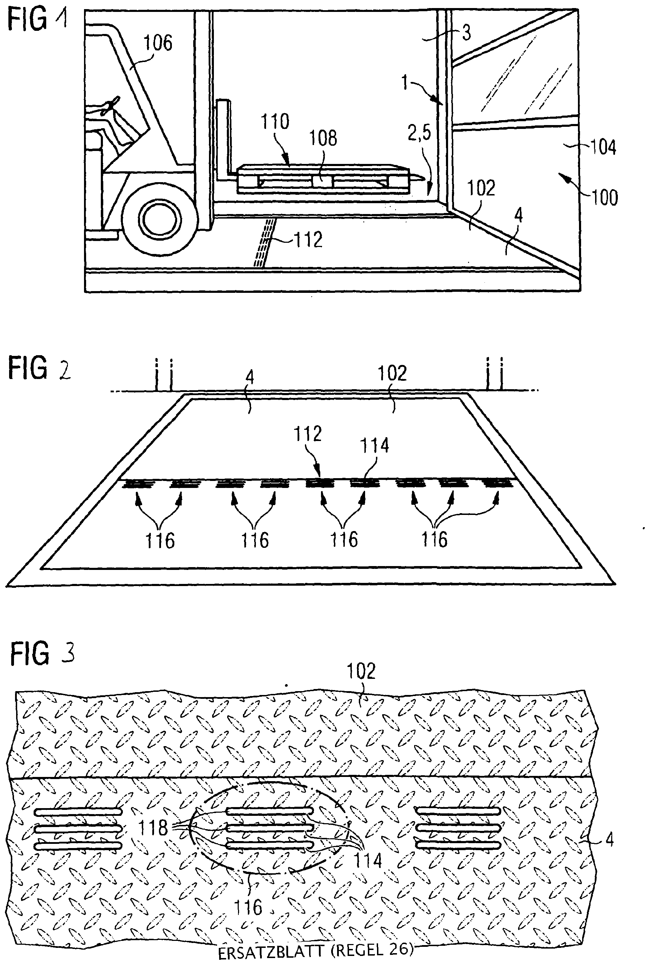

In Fig. 1 ist schematisch ein Bauwerkszugang 1 mit einem Transportweg 2 gezeigt, auf dem Waren oder Güter in ein Bauwerk 3 eingebracht werden können oder ausgebracht werden können. Eine untere Begrenzung 5 des Transportweges 2 ist durch einen Metallbereich 4 gebildet. Auf der dem Transportweg 2 abgewandten Seite des Metallbereiches 4 sind mehrere RFID-Empfangs- und/oder Sendeeinheiten 19 angebracht. Dadurch ist eine besonders für die Anwendung in der Logistik optimierte RFID-Vorrichtung 50 gebildet, die ohne weitere Schutzmaßnahmen den rauen Arbeitsbedingungen in der Logistik stand hält und dennoch bezüglich der RFID-Erfassung in der Logistik optimiert ist.

Der RFID-Empfangs- und/oder Sendeeinheit 19 ist hinter einem Metallbereich 4 angeordnet, so dass der Metallbereich 4 zwischen dem Transportweg 2 und der RFID-Sende- und/oder Empfangseinheit 19 angeordnet ist und diese entsprechend schützt.

In Fig. 1 ist die RFID-Vorrichtung 50 im Bereich eines Transportweges 2 am Beispiel einer Ladestelle 100 mit einer Ladebrücke 102 und einem Tor 104 zum Abschließen der Ladestelle 100 dargestellt. Die Ladebrücke 102 ist aus Metall gebildet und hat eine Metallplatte 103, die den Metallbereich 4 bildet, der die RFID-Sende- und/oder Empfangseinheit 19 schützt.

In Fig. 1 ist dargestellt, dass die Ladebrücke 102 zum Bilden des Transportweges 2 für ein Flurförderfahrzeug 106, hier in Form eines Gabelstaplers, ausgebildet ist, welches insbesondere zum Transport von Paletten 108 dient. Die Palette 108 ist ein Beispiel für einen Ladungsträger 110, der mit RFID gekennzeichnet ist und insbesondere einen Transponder trägt, wie dies später noch näher erläutert wird.

Ziel der RFID-Erfassung ist, mittels RFID Paletten oder Kisten und allgemein Ladungsträger 110 beim Passieren einer Transportwegs-Begrenzung 5 zu erfassen. Inbesondere soll das Überfahren des Transportweges 2 durch einen Ladungsträger 110 erfasst werden. Demgemäß ist ein Gabelstapler mit der Palette 108 auf der Ladebrücke 102 vor einem Ladetor 104 dargestellt.

Die Metallplatte 103, die ein Beispiel für eine untere Transportweg-Begrenzung 5 darstellt, ist mit Signaldurchlassbereichen 112 versehen.

Insbesondere ist die Metallplatte 103, wie dies in Fig. 2 dargestellt ist, mit Schlitzen 114 versehen, durch die unter der Metallplatte 103 montierte Antennen (in Fig. 2 nicht dargestellt) strahlen.

Wie dies näher in Fig. 3 dargestellt ist, die mehrere Schlitzanordnungen 116 mit jeweils mehreren Schlitzen 114 an der Metallplatte 103 im Detail darstellt, sind die Schlitze 114 durch Kunststoffeinlagen verdeckt, um im Betrieb zu verhindern, dass Staub, Schmutz oder Wasser durch die Metallplatte 103 dringt.

In Fig. 3 markiert ein Oval drei Schlitze 114, durch die genau eine Antenne strahlen kann. Insgesamt sind in Fig. 3 drei Schlitzkombinationen oder Schlitzanordnungen 116 zu sehen.

Fig. 4 zeigt die Schlitze 114 von der Unterseite 120 der Metallplatte 103 aus gesehen.

Die Schlitze 114 sind durch wenigstens ein Verstärkungselement 121 verstärkt. Insbesondere ist ein mit entsprechenden Schlitzen versehenes metallisches Verstärkungselement 121 im Bereich jeder Schlitzanordnung 116 an der dem Transportweg 2 abgewandten Seite des Metallbereiches 4 befestigt.

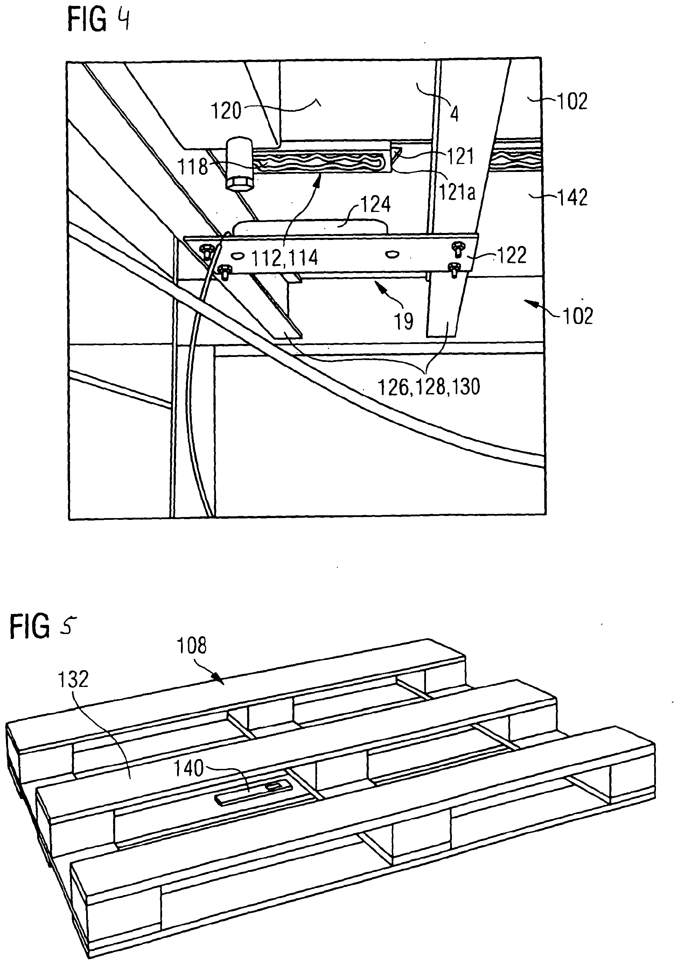

Bei dem in Fig. 4 dargestellten Ausführungsbeispiel sind die Schlitze 114 durch aufgeschweißte Unterlagen in Toren von Metallplattenverstärkungen 121a verstärkt, um auch bei großer Punktbelastung auf die Metallplatte 103 ein Einreißen zu verhindern.

Unterhalb der Schlitze 114 ist auf einer Befestigungsanordnung 122 mit Abstand zu den Schlitzen 114 eine Antenne 124 der RFID-Sende- und/oder Empfangseinheit 19 befestigt.

In dem in Fig. 4 dargestellten Ausführungsbeispiel weist die Metallplatte 103 auf ihrer Unterseite 120 mehrere Verstärkungsrippen 126 in Form von T-Profilen 128 auf. An den Unterseiten dieser T-Profile ist ein Blech (beispielsweise Aluminiumblech) zum Tragen der Antenne 124 (beispielsweise eine Patch-Antenne) vorgesehen.

Die T-Profile 128 bilden Längsträger 130 der Ladebrücke 102. Ein Aluminiumblech ist links und rechts an Längsträgern 130 der Ladebrücke 102 angeschraubt, um die Befestigungsanordnung 122 zu bilden.

Fig. 4 zeigt somit eine Sicht auf eine Schlitzanordnung 116 mit drei Schlitzen 114 von unten. Auf der Befestigungsanordnung 122 sitzt eine UHF-RFID-Antenne 124, die nach oben auf die Schlitze 114 strahlt.

Fig. 5 zeigt die Palette 108 in Form einer Holzpalette im Euroformat. Auf einem Paletten-Längsträger 132 ist ein Transponder 140 aufgeschraubt, der eine Identifikation der Palette 108 mittels RFID ermöglicht.

Demnach zeigt Fig. 5 eine Holzpalette im Euroformat mit einem aufgeschraubten Transponder 140.

Mit der in den Fig. 1 und 2 dargestellten Verwendung der Metallplatte 103 als Bodenplatte 142 und/oder als untere Transportwegs-Begrenzung 5 lässt sich eine RFID-Erfassung von Ladungsträgern 110 von unten erreichen.

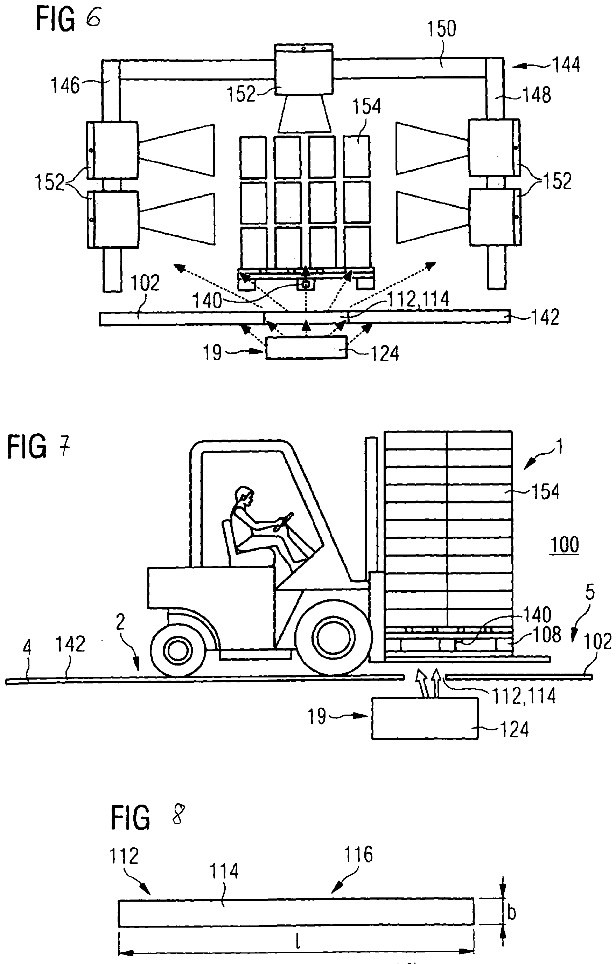

Eine schematische Darstellung einer solchen RFID-Erfassung von unten ist in Fig. 6 dargestellt.

Fig. 6 zeigt eine metallische Bodenplatte 142 mit Signaldurchlassbereich 19 und darunter angebrachter Antenne 124.

In Fig. 6 ist weiter ein bisher übliches konventionelles UHF-Antennengate 144 dargestellt, das aus einem linken Träger 146, einem rechten Träger 148 und einem oben angebrachten Querträger 150 besteht. Am Querträger 150 ist eine Antenne 152 angeordnet, an beiden Seitenträgern 146, 148 sind jeweils zwei Antennen 152 angeordnet. Die schematisch dargestellten Dreiecke sollen die von den Antennen 152 des Antennengates 144 emittierten elektromagnetischen Wellen darstellen. Das UHF-Antennengate 144 steht auf oder oberhalb der Bodenplatte 142.

Weiter ist die Palette 108 mit dem Transponder 140 und mit Waren 154 darauf dargestellt.

In dem dargestellten Beispiel soll die Palette 108 mit Waren 154 beladen sein, die aus Metall gebildet sind oder die Flüssigkeiten beinhalten; vorstellbar ist auch, dass die Waren 154 in einer sehr häufig eingesetzten metallischen Gitterbox (nicht dargestellt) gelagert sein könnten.

Eine solche Ware 154 kann von den UHF-Wellen nicht durchdrungen werden, so dass in der Regel eine Erfassung des Transponders 140 weder durch die Antenne 152 auf dem oberen Querträger 150 des Antennengates 144, noch durch die an den Seiten des Antennengates 144 angebrachten Antennen 152 möglich ist.

Freier Zugang ist lediglich von unten, d.h. durch die Schlitzkombinationen oder Schlitzanordnungen 116, in der Bodenplatte 142 möglich.

In Fig. 6 ist auch gut zu erkennen, dass die seitlichen Antennen des Antennengates 144 und die Träger 146, 148, 150 des Antennengates 144 selbst den Warenverkehr der Flurförderfahrzeuge 106 behindern können, während die Boden-Antenne 124, die durch die Schlitzkombinationen oder Schlitzanordnungen 116 strahlt, vollständig im Boden versenkt ist. Mithin ist auch keine Beschädigung der Boden-Antenne 124 möglich.

In Fig. 7 ist die praktische Erfassung einer Palette 108 mit einer Boden-Antenne 124 zu sehen. Es ist das Flurförderfahrzeug 106 mit der mit Waren 154, beispielsweise Getränkedosen, beladenen Palette 108 zu sehen, wobei der Transponder 140 der Palette 108 trotz der Beladung mit den metallischen Waren 154 leicht von unten durch die Bodenplatte 142 hindurch mittels der Bodenantenne 124 möglich ist.

Fig. 7 zeigt demnach die Erfassung einer beladenen Palette 108 mit RFID über eine Boden-Antennen-Schlitzkombination. Der Transponder 140 ist in der Palette 108 untergebracht.

Man sieht deutlich, dass der Transportweg 2 für den Fahrer vollkommen frei von Antennenaufbauten ist.

Im Folgenden werden verschiedene mögliche Ausführungsformen von Schlitzanordnungen 116 oder Schlitzkombinationen anhand der Darstellungen in den Fig. 8 bis 12 näher erläutert.

Alle dargestellten Schlitzkombinationen weisen einen oder mehrere Einzelschlitze 114 auf.

In empirischen Versuchen ist ermittelt worden, dass bei den RFID-Wellenlängen, wie sie in Europa verwendet werden, Schlitze mit einer Breite von 6 mm und einer Länge von 140 mm ideal sind. Allgemein sind Schlitze z.B. mit einer Breite b von ca 1 mm bis 20 mm und einer Länge zwischen ca. 10 mm und ca. 500 mm vorgesehen.

Weist eine Schlitzanordnung 116 mehr als einen Schlitz 114 auf, so ist vorzugsweise ein vorbestimmter Abstand d vorgesehen. Insbesondere ist zwischen den Schlitzen 114 ein Steg 160 mit einer dem Abstand d entsprechenden Stegbreite vorgesehen.

In empirischen Versuchen hat sich eine Stegbreite von ca. 20 mm als ideal herausgestellt. Auch hier sind Abweichungen möglich, die je nach Material des Metallbereiches, insbesondere Metallmaterial und Materialdicke, und nach eingesetzter Wellenlänge auszuwählen sind.

Optimale Dimensionen der Schlitze 114 sowie der Schlitzabstände d lassen sich durch wenige empirische Versuche ermitteln.

Fig. 8 zeigt eine erste mögliche Schlitzanordnung 116 mit einem Schlitz 114. Es wird eine Schlitzkombination aus einem einzelnen Schlitz 114 gebildet. Die Schlitzbreite b beträgt vorzugsweise ca. 6 mm, die Schlitzlänge l vorzugsweise ca. 140 mm.

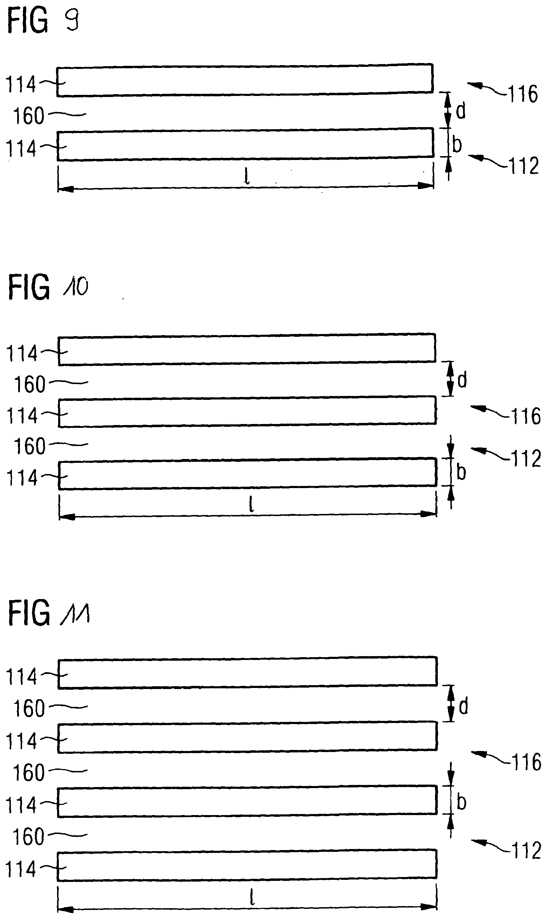

Fig. 9 zeigt eine zweite Ausführungsform einer Schlitzanordnung 116 mit zwei Schlitzen 114. Die zwei Schlitze 114 sind parallel zueinander ausgerichtet, wobei dazwischen ein Steg 160 mit der Stegbreite d gebildet ist. Vorzugsweise beträgt die Schlitzbreite b jeweils ca. 6 mm und die Schlitzlänge l jeweils ca. 140 mm, und der Schlitzabstand d beträgt ca. 20 mm. Somit ist eine Schlitzkombination mit zwei Schlitzen 114 gebildet.

Fig. 10 zeigt eine Schlitzkombination mit drei Schlitzen 114.

Vorzugsweise sind die drei Schlitze 114 der in Fig. 10 dargestellten Schlitzanordnung 116 parallel und ausgerichtet zueinander angeordnet, wobei zwei der Stege 160, jeweils ebenfalls mit der Länge l von ca. 140 mm und der Stegbreite d von ca. 20 mm ausgebildet sind. Die Dimensionen der Schlitze 114 sind vorzugsweise wiederum ca. 6 mm für die Schlitzbreite b und ca. 140 mm für die Schlitzlänge l.

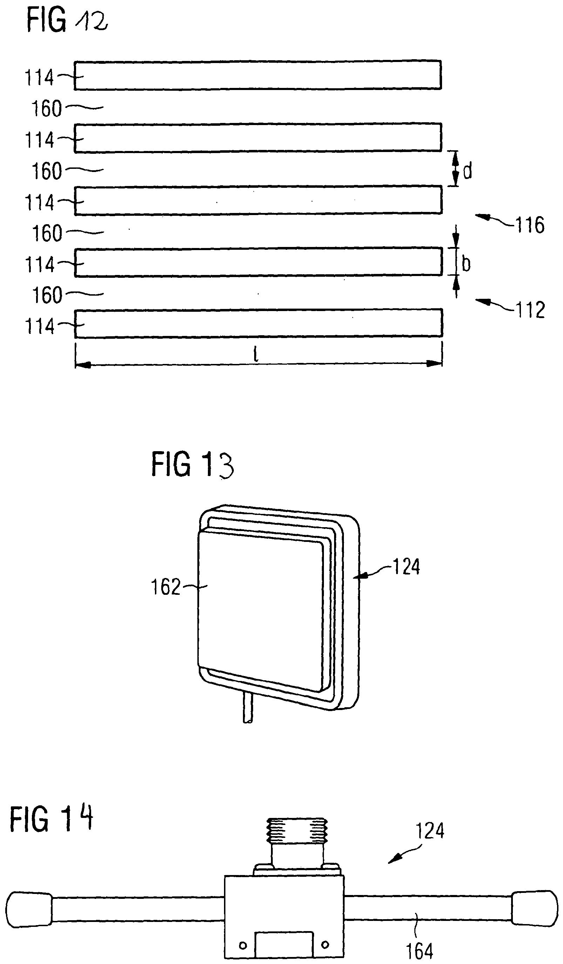

Fig. 11 zeigt eine entsprechende Schlitzanordnung 116 mit vier Schlitzen 114; und Fig. 12 zeigt eine entsprechende Schlitzanordnung 116 mit fünf Schlitzen 114. Stegbreite d, Schlitzbreite b, Schlitzlänge l sowie Ausrichtung und insbesondere parallele Anordnung der Schlitze 114 sind entsprechend wie bei den anderen Schlitzanordnungen 116 vorgesehen.

Die in den Fig. 8 bis 12 dargestellten Schlitzkombinationen und Schlitzanordnungen 116 unterscheiden sich bezüglich der Breite B und der Höhe h des Erfassungsbereiches. Empirische Versuche haben gezeigt, dass Schlitzkombinationen mit einer ungeradzahligen Anzahl von Schlitzen besser zu wirken scheinen als solche mit einer geradzahligen Anzahl.

Daher ist eine Schlitzanordnung 116 mit einer ungeradzahligen Anzahl von Schlitzen 114 bevorzugt.

Am meisten bevorzugt ist eine Schlitzanordnung 116 mit drei Schlitzen. Die Kombination aus drei Schlitzen 114 stellt einen guten Kompromiss zwischen der Forderung nach einer möglichst geringen mechanischen Schwächung der Bodenplatte 142 und einer möglichst geringen Zahl an Antennen 124 dar.

Fig. 13 und 14 zeigen zwei Ausführungsbeispiele von als Boden-Antennen 124 einsetzbaren Antennen. Die gezeigten Antennen 124 sind auf dem Markt erhältlich und grundsätzlich für sich bereits bekannt. Fig. 13 zeigt eine Patch-Antenne 162, und Fig. 14 zeigt eine Dipol-Antenne 164.

Die Patch-Antenne 162 ist beispielsweise eine UHF-Patch-Antenne, die zirkular polarisiert strahlt. Der Öffnungswinkel kann ca. 100°, zirkular polarisiert, betragen. Die Größe kann z.B. 170 x 170 mm betragen, allgemein beträgt die Größe der Patch-Antenne 162 ca. $\lambda/2 \times \lambda/2$, wobei $\lambda$ die Wellenlänge der verwendeten RFID-Signale ist. Die Leistung kann beispielsweise ca. 2,0 Watt betragen. Ein Anschluss ist z.B. über eine SMA-Buchse möglich. Solche Antennen sind in der Schutzart IP 65 auf dem Markt erhältlich.

Die in Fig. 14 dargestellte Dipol-Antenne 164 hat insbesondere eine Größe von $\lambda/2$, beispielsweise beträgt die Größe ca. 170 mm. Auch hier kann eine Leistung von 2,0 Watt gegeben sein. Als Anschluss ist beispielsweise eine N-Buchse möglich.

Insbesondere ist die Dipol-Antenne 164 ein $\lambda/2$-Dipol, der linear polarisiert abstrahlt.

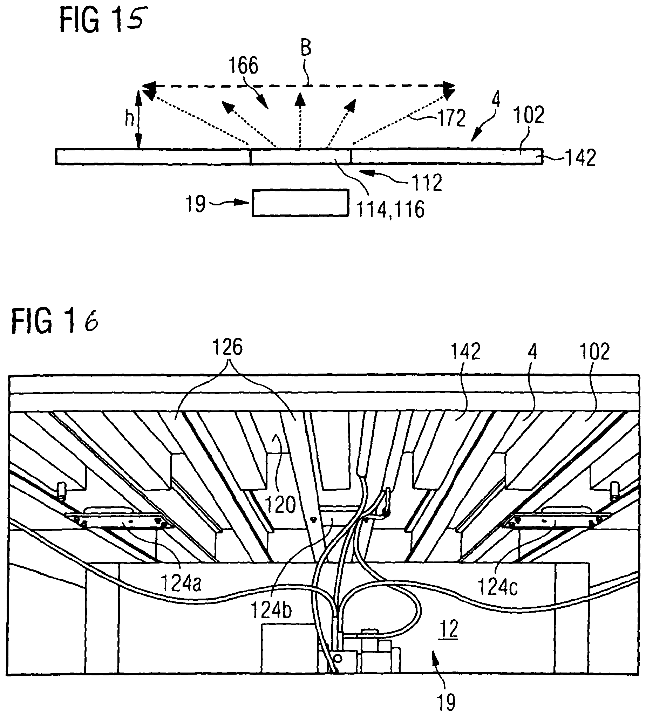

Der Erfassungsbereich einer Antenne 124 wird im Folgenden anhand der schematischen Darstellung in Fig. 15 näher erläutert. In Fig. 15 ist die Bodenplatte 142 mit dem Signaldurchlassbereich 112 und der Antenne 124 zusammen mit dem Erfassungsbereich 166 der Antenne dargestellt. Der Erfassungsbereich 126 hat eine Höhe h und eine Breite B.

In Abhängigkeit von der eingesetzten Antenne 124 lässt sich die Höhe h und die Breite B des Erfassungsbereiches 166 einstellen. Beim Einsatz von Antennen 124, die ein sehr gerichtetes Antennenfeld erzeugen, wie z.B. die Patch-Antennen 162, ist die erreichbare Breite B des Erfassungsbereiches 166 geringer als bei Dipol-Antennen 164.

Ist der Erfassungsbereich 166 sehr breit angelegt, dann lässt sich mit wenigen Antennen 124 eine Ladebrücke 102 vollständig abdecken. Die Höhe h des Erfassungsbereiches 166 bestimmt den Abstand, den eine Palette 108 mit Transponder 140 beim Transport über die Bodenplatte 142 maximal haben sollte, um sicher mit der RFID-Antenne 124 erfasst zu werden.

Empirische Versuche haben gezeigt, dass zur vollständigen Feldabdeckung einer Metallplatte 103 mit einer Breite von ca. 200 cm, ca. drei Schlitzkombinationen 116 mit jeweils drei Einzelschlitzen 114, wobei jede Schlitzkombination 116 mit jeweils einer Antenne 124 bestückt ist, ausreichen.

Fig. 16 zeigt die Anordnung der drei Antennen 124 in einer Ansicht auf die Metallplatte 103 von unten. Es ist eine erste Antenne 124a, eine zweite Antenne 124b und eine dritte Antenne 124c dargestellt. Zu jeder der Antennen 124a, 124b, 124c gehört eine Schlitzanordnung 116, die oberhalb der Antenne 124 angeordnet ist. Fig. 16 zeigt demnach den Blick unter die Metallplatte 103 mit drei Antennen 124a, 124b, 124c.

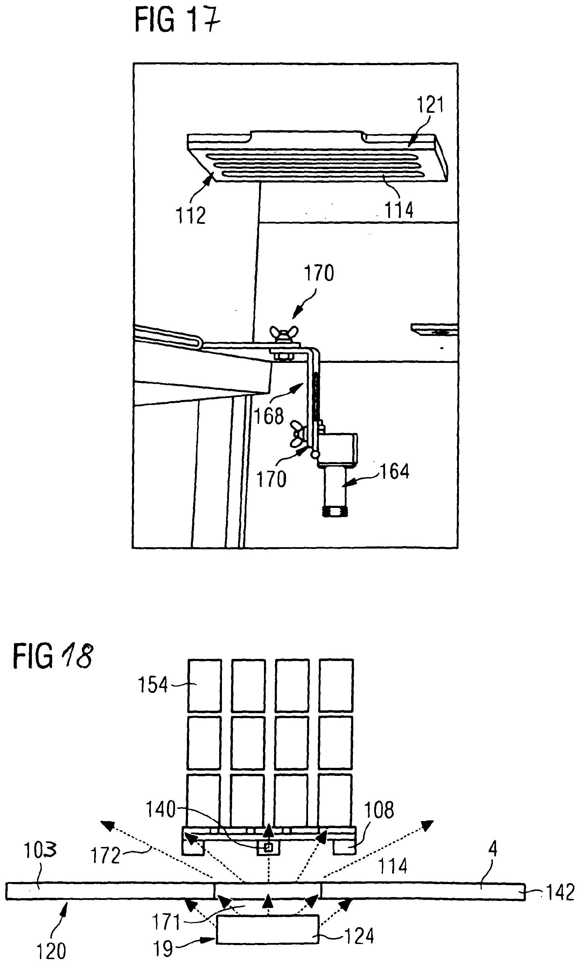

Im Folgenden wird eine Antennenabstimmung anhand der Darstellung in Fig. 17 näher erläutert. Fig. 17 zeigt die Schlitzanordnung 116 mit Verstärkungselement 121. Weiter ist die Befestigungsanordnung 122 in der Darstellung von Fig. 17 mit einer einstellbaren Befestigungseinrichtung 168 versehen, so dass die Lage der Antenne 124 in wenigstens zwei Richtungen einstellbar ist. Die einstellbare Befestigungseinrichtung 168 weist eine Verschiebeeinheit 170 auf. Als Antenne ist hier eine Dipol-Antenne 164 eingesetzt; die Schlitzanordnung 116 weist drei einzelne Schlitze 114 auf.

Allgemein wird die Antenne 124 unter der jeweiligen Schlitzanordnung 116 über ein Anschlusskabel von einer RFID-Steuereinheit gespeist. Vorzugsweise wird die Antenne 124 über ein Koaxial-Kabel von einem UHF-Reader als Steuereinheit gespeist.

Um eine optimale Leistungsübertragung zwischen Antenne 124 und Steuereinheit zu erreichen, sollten die Ausgangsimpedanz der RFID-Steuereinheit auf die Impedanz des Kabels und die Impedanz des Kabels an die Eingangsimpedanz der Antenne 124 abgestimmt werden.

In empirischen Versuchen ist zu beobachten, dass die in Metall ausgeführte Schlitzkombination oder Schlitzanordnung 116 auf die Impedanz der Antenne 124 rückwirken kann. Mit anderen Worten kann sich die Antennenimpedanz verglichen zu der Impedanz einer gleichen Antenne, die frei montiert ist, ändern. Aus diesem Grunde kann es vorteilhaft sein, zwischen Kabel und Antenne eine Impedanzanpassung mit einem Anpassglied durchzuführen. Solche Anpassglieder kommen in der UHF-Technik häufig vor.

Ein Abgleich aller Komponenten erfolgt vorzugsweise gemäß dem im Folgenden erläuterten Verfahren:

- Schritt 1: verschiebbares Montieren der Antenne 124 unter der Schlitzanordnung 116;
- Schritt 2: Verschieben der Antenne vertikal zu der Schlitzanordnung 116 (Verändern der vertikalen Entfernung zu der Schlitzkombination) und Verschieben der Antenne horizontal zu der Schlitzanordnung 116, um den Montagepunkt mit dem im besten Erfassungsbereich 166 zu finden;
- Schritt 3: Überprüfen mittels eines Impedanzmessgeräts, ob das Anpassglied die Impedanz der Antenne an die Impedanz des Kabels angleicht.

Im Folgenden wird anhand der Fig. 18 die Ausnutzung des Huygens'schen Prinzips erläutert.

In Fig. 18 ist die praktische Erfassung der Palette 108 mit RFID beim Einsatz einer Schlitzkombination - beispielsweise der Schlitzanordnung 116 - zu sehen. Fig. 18 zeigt die Bodenplatte 142 mit dem Signaldurchlassbereich 112, der mehrere Schlitze 114 aufweist und die Antenne 124 unterhalb des Signaldurchlassbereiches 112. Außerdem ist der Erfassungsbereich 171 der Antenne unterhalb der Bodenplatte 142 sowie der Erfassungsbereich 166 der Antenne oberhalb der Bodenplatte 142 dargestellt. Es ist die Erfassung der Palette 108 mit Waren 154 mittels des Transponders 140 dargestellt.

Die einzelnen Schlitze 114 der Schlitzkombinationen sind so ausgeführt, dass sie die Funktion eines Sekundärstrahlers übernehmen können. Die von dem Primärstrahler, dies ist insbesondere die Antenne 124 unterhalb der Schlitzkombination 116, emittierten elektromagnetischen Wellen 172 treffen auf die verglichen mit der Wellenlänge der elektromagnetischen Welle 172 genügend schmalen Schlitze 114 auf. Jeder Schlitz 114 verhält sich dann wie ein Sender, der eigene Wellen abgeben kann. Dies erfolgt gemäß dem Huygens'schen Prinzip. Allgemein ist das Huygens'sche Prinzip beispielsweise in Gerthsen, Kneser, Vogel: "Physik", Springer Verlag; Berlin, Heidelberg, New York; 13. Auflage, 1977, näher dargestellt.

Würde man auf diesen positiven Effekt verzichten wollen, wären die elektromagnetischen Wellen 172 auf andere Art und Weise zur Verfügung zu stellen. Die Bodenplatte 142 müsste durch einen sehr langen Schlitz geöffnet werden, der einen ungehinderten Durchtritt der von der Bodenantenne direkt ausgestrahlten Wellen ermöglichen soll. Damit würde die Bodenplatte 142 mechanisch sehr geschwächt und die Antenne 124 müsste entsprechend aufwändig geschützt werden, um ein Einbrechen der Flurförderfahrzeuge zu verhindern.

Für die in Europa verwendeten RFID-Frequenzen wurden bezüglich Schlitzen 114 in sehr dicken Metallplatten 103 im UHF-Bereich eine Länge von 140 mm und eine Breite von ca. 6 mm als optimal ermittelt.

Aus der Physik weiß man gemäß dem Huygens'schen Prinzip: "Trifft eine ebene Welle auf einen Schirm, in dem sich eine Öffnung befindet, deren Durchmesser klein im Vergleich zur Wellenlänge ist, so breitet sich hinter dem Schirm um die Öffnung als Zentrum eine Kugelwelle aus."

Allerdings wird bei der Erläuterung des Huygens'schen Prinzips die Öffnung immer in unendlich dünnen Materialien ausgeführt; bei dem Einsatz in Bodenplatten 142 von Ladebrücken 102 oder dergleichen unteren Transportwegsträgern sind Plattendicken von 8 mm oder auch mehr möglich. Die aus Stabilitätsgründen aufgeschweißten Verstärkungselemente 121 sind z.B. 10 mm dick, so dass insgesamt ein Spalt in einem 18 mm dicken Material zum Einsatz kommt.

Als Faustformel für die Schlitzlänge l kann daher verwendet werden:

$$l = a \cdot \lambda/2,$$

wobei l die Schlitzlänge, a ein Abschlagsfaktor und $\lambda$ die Wellenlänge der RFID-Signale ist. Besonders geeignete Werte für den Abschlagsfaktor sind: $0,5<a<1$.

Die Schlitzbreite b sollte möglichst klein sein.

Die Antenne 124 als Primärstrahler unterhalb der Schlitzkombination 116 kann zirkular polarisiert, z.B. wie bei der Patch-Antenne 162, oder linear polarisiert, z.B. wie bei der Dipol-Antenne 164, sein. Unabhängig davon wirken die Schlitze 114 wie Polarisationsfilter. Dies bedeutet, dass die Schlitzkombination 116 als Sekundärstrahler unabhängig von der Anregung mit linearer Polarisation strahlt.

Wird eine Dipol-Antenne 164 verwendet, so wird diese vorzugsweise im Wesentlichen quer zur Länge der Schlitze 114 angeordnet.

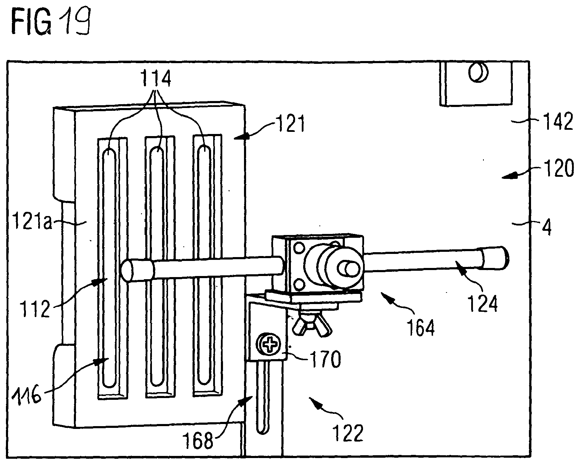

Die Fig. 19 zeigt einen entsprechenden Dipol vor einer Schlitzanordnung 116 mit den aufgeschweißten Verstärkungen (z.B. Verstärkungselement 121).

**Bezugszeichenliste:**

| | |
|---|---|
| 1 | Bauwerkszugang |
| 2 | Transportweg |
| 3 | Bauwerk |
| 4 | Metallbereich |
| 5 | Begrenzung |
| 19 | RFID-Sende- und/oder Empfangseinheit |
| 50 | RFID-Vorrichtung |
| 100 | Ladestelle |
| 102 | Ladebrücke |
| 103 | Metallplatte |

| | |
|---|---|
| 104 | Tor |
| 106 | Flurförderfahrzeug |
| 108 | Paletten |
| 110 | Ladungsträger |
| 112 | Signaldurchlassbereich |
| 114 | Schlitz |
| 116 | Schlitzanordnung |
| 118 | Kunststoffeinlagen |
| 120 | Unterseite |
| 121 | Verstärkungselement |
| 121a | Metallplattenverstärkung |
| 122 | Befestigungsanordnung |
| 124 | Antenne |
| 124a | erste Antenne |
| 124b | zweite Antenne |
| 124c | dritte Antenne |
| 126 | Verstärkungsrippe |
| 128 | T-Profil |
| 130 | Längsträger |
| 132 | Paletten-Längsträger |
| 140 | Transponder |
| 142 | Bodenplatte |
| 144 | Antennengate |
| 146 | linker Träger |
| 148 | rechter Träger |
| 150 | Querträger |
| 152 | Antenne |
| 154 | Waren |
| 160 | Steg |
| 162 | Patchantenne |
| 164 | Dipolantenne |
| 166 | Erfassungsbereich (auf Vorder- oder Oberseite des Metallbereichs) |
| 168 | einstellbare Befestigungseinrichtung |
| 170 | Verschiebeeinheit |
| 171 | Erfassungsbereich (auf Rück- oder Unterseite des Metallbereichs) |
| 172 | elektromagnetische Wellen |
| d | Schlitzabstand |
| h | Höhe des Erfassungsbereichs |
| B | Breite des Erfassungsbereichs |
| l | Schlitzlänge |
| b | Schlitzbreite |

## Patentansprüche

1. RFID-Vorrichtung (50) zur Erfassung von mit RFID-Transpondern (140) gekennzeichneten Gegenständen (154) an einem Transportweg (2) für die Gegenstände (154) mit einer RFID-Sende- und/oder Empfangseinheit (19) zur Erfassung der RFID-Transponder (140) mittels einer RFID-Antenne (124), so dass das Passieren eines RFID-Transponders (140) über den Transportweg (2) automatisch erfassbar ist, und einem Metallbereich (4),
   **dadurch gekennzeichnet, dass**
   der an dem Transportweg (2) anzuordnende Metallbereich (4) mit einem Signaldurchlassbereich (112) zum Durchlassen von RFID-Signalen durch den Metallbereich (4) versehen ist,
   und die RFID-Sende- und/oder Empfangseinheit (19) auf einer dem Transportweg (2) abzuwendenden Seite des Metallbereichs (4) angeordnet ist.

2. RFID-Vorrichtung (50) nach Anspruch 1,
   **dadurch gekennzeichnet,**
   **dass** der Metallbereich (4) durch eine Metallplatte (103) und/oder eine Bodenplatte (142) gebildet ist.

3. RFID-Vorrichtung (50) nach Anspruch 2,
**dadurch gekennzeichnet,**
**dass** der Metallbereich (4) Teil einer Tragkonstruktion (103, 102) ist, über welche der Transportweg (2) führt, wobei die RFID-Sende- und/oder Empfangseinheit unter dem Metallbereich (4) angeordnet ist.

4. RFID-Vorrichtung (50) nach einem der voranstehenden Ansprüche,
**dadurch gekennzeichnet,**
**dass** der Signaldurchlassbereich (112) wenigstens einen Schlitz (114) in dem Metallbereich aufweist.

5. RFID-Vorrichtung (50) nach Anspruch 4,
**dadurch gekennzeichnet,**
**dass** der Signaldurchlassbereich (112) eine Schlitzkombination aus einer Mehrzahl von Schlitzen (114) aufweist.

6. RFID-Vorrichtung (50) nach Anspruch 5,
**dadurch gekennzeichnet,**
**dass** die Schlitzkombination (116) ungeradzahlige Anzahl von Schlitzen (114) aufweist und vorzugsweise drei Schlitze (114) aufweist.

7. RFID-Vorrichtung (50) nach einem der Ansprüche 4 bis 6,
**dadurch gekennzeichnet,**
**dass** der wenigstens eine Schlitz (114) eine sich in Längsrichtung des erstreckende Schlitzlänge (l) aufweist, die kleiner als die halbe Wellenlänge der RFID-Signale der RFID-Sende- und/oder Empfangseinheit (19) ist.

8. RFID-Vorrichtung (50) nach einem der Ansprüche 4 bis 7,
**dadurch gekennzeichnet,**
**dass** der wenigstens eine Schlitz (114) eine Schlitzlänge von ca. 100 mm bis ca. 180 mm hat und vorzugsweise eine Schlitzbreite von ca. 1 mm bis ca. 20 mm hat.

9. RFID-Vorrichtung (50) nach einem der Ansprüche 4 bis 8,
**dadurch gekennzeichnet,**
**dass** der wenigstens eine Schlitz (114) mit einem dielektrischen Material verfüllt ist.

10. RFID-Vorrichtung (50) nach einem der voranstehenden Ansprüche,
**dadurch gekennzeichnet,**
**dass** auf der dem Transportweg (2) abzuwendenden Seite des Metallbereichs (4) eine RFID-Antenne (124), insbesondere eine Patch-Antenne (162) oder eine Dipol-Antenne (164), mit vorbestimmten Abstand zu dem Metallbereich (4) und in Überdeckung mit dem Signaldurchlassbereich (112) mittels einer Befestigungsvorrichtung (122) angeordnet ist.

11. RFID-Vorrichtung (50) nach Anspruch 10 und nach einem der Ansprüche 4 bis 9,
**dadurch gekennzeichnet,**
**dass** die Dipol-Antenne (164) im Wesentlichen quer zu dem wenigstens einen Schlitz (114) angeordnet ist.

12. RFID-Vorrichtung (50) nach einem der voranstehenden Ansprüche,
**dadurch gekennzeichnet,**
**dass** der Signaldurchlassbereich (112) mit einem Verstärkungselement (121) verstärkt ist.

13. RFID-Vorrichtung (50) nach Anspruch 12,
**dadurch gekennzeichnet,**
**dass** das Verstärkungselement (121) ein auf der dem Transportweg abzuwendenden Seite auf den Metallbereich befestigtes, insbesondere aufgeschweißtes, Metallplattenelement mit einer der Schlitzkombination (116) des Metallbereichs (4) entsprechenden Schlitzkombination hat.

14. RFID-Vorrichtung (50) nach einem der voranstehenden Ansprüche,
**dadurch gekennzeichnet,**
**dass** der Metallbereich (4) als Boden oder als Teil eines Bodens des Transportwegs (2) und insbesondere als Fahrweg (5) für Fahrzeuge (108), insbesondere Flurförderfahrzeuge, ausgebildet ist.

**15.** Ladebrücke oder Laderampe, **gekennzeichnet durch** eine RFID-Vorrichtung nach einem der voranstehenden Ansprüche, wobei die zumindest teilweise aus Metall ausgebildete Laderampe oder Ladebrücke den Metallbereich (4) bildet oder aufweist.

## Claims

**1.** RFID device (50) for detecting objects (154) marked with RFID transponders (140) on a transport path (2) for the objects (154), having an RFID transmitting and/or receiving unit (19) for detecting the RFID transponders (140) by means of an RFID antenna (124), so that the passage of an RFID transponder (140) over the transport path (2) can be detected automatically, and having a metal region (4),
**characterized in that**
the metal region (4) to be arranged on the transport path (2) is provided with a signal passage region (112) for allowing RFID signals to pass through the metal region (4)
and the RFID transmitting and/or receiving unit (19) is arranged on a side of the metal region (4) to be turned away from the transport path (2).

**2.** RFID device (50) according to claim 1,
**characterized in that**
the metal region (4) is formed by a metal plate (103) and/or a base plate (142).

**3.** RFID device (50) according to claim 2,
**characterized in that**
the metal region (4) is part of a supporting structure (103, 102) over which the transport path (2) leads, the RFID transmitting and/or receiving unit being arranged below the metal region (4).

**4.** RFID device (50) according to one of the preceding claims,
**characterized in that**
the signal passage region (112) has at least one slot (114) in the metal region.

**5.** RFID device (50) according to claim 4,
**characterized in that**
the signal passage region (112) has a slot combination of a plurality of slots (114).

**6.** RFID device (50) according to claim 5,
**characterized in that**
the slot combination (116) has an odd number of slots (114) and preferably has three slots (114).

**7.** RFID device (50) according to any of claims 4 to 6,
**characterized in that**
the at least one slot (114) has a slot length (l) which extends in the longitudinal direction and is smaller than half the wavelength of the RFID signals of the RFID transmitting and/or receiving unit (19).

**8.** RFID device (50) according to any of claims 4 to 7,
**characterized in that**
the at least one slot (114) has a slot length of approximately 100 mm to approximately 180 mm and preferably a slot width of approximately 1 mm to approximately 20 mm.

**9.** RFID device (50) according to one of claims 4 to 8,
**characterized in that**
the at least one slot (114) is filled with a dielectric material.

**10.** RFID device (50) according to one of the preceding claims,
**characterized in that**
an RFID antenna (124), in particular a patch antenna (162) or a dipole antenna (164), is arranged at a predetermined distance from the metal region (4) and in overlap with the signal passage region (112) by means of a fastening device (122) on the side of the metal region (4) which is to be turned away from the transport path (2).

**11.** RFID device (50) according to claim 10 and to any of claims 4 to 9,
**characterized in that**
the dipole antenna (164) is arranged substantially transversely to the at least one slot (114).

**12.** RFID device (50) according to one of the preceding claims,
**characterized in that**
the signal passage region (112) is reinforced with a reinforcing element (121).

**13.** RFID device (50) according to claim 12,
**characterized in that**
the reinforcing element (121) has a metal plate element which is fastened, in particular welded-on, to the metal region on the side to be turned away from the transport path and which has a slot combination corresponding to the slot combination (116) of the metal region (4).

**14.** RFID device (50) according to one of the preceding claims,
**characterized in that**
the metal region (4) is designed as a floor or as part of a floor of the transport path (2) and in particular as a travel path (5) for vehicles (108), in particular industrial trucks.

**15.** Loading bridge or loading ramp, **characterized by** an RFID device in accordance with one of the preceding claims, the loading ramp or loading bridge, which is at least partially made of metal, forming or having the metal region (4).

**Revendications**

**1.** Dispositif RFID (50) pour détecter des objets (154) marqués par des transpondeurs RFID (140) sur un chemin de transport (2) pour les objets (154), comprenant une unité d'émission et/ou de réception RFID (19) pour détecter les transpondeurs RFID (140) au moyen d'une antenne RFID (124), de sorte que le passage d'un transpondeur RFID (140) sur le chemin de transport (2) peut être détecté automatiquement, et comprenant une zone métallique (4),
**caractérisé en ce que**
la zone métallique (4) à disposer sur le chemin de transport (2) est munie d'une zone de passage de signal (112) pour faire passer des signaux RFID à travers la zone métallique (4)
et l'unité d'émission et/ou de réception RFID (19) est disposée sur un côté de la zone métallique (4) à détourner du chemin de transport (2).

**2.** Dispositif RFID (50) selon la revendication 1,
**caractérisé en ce que**
la zone métallique (4) est formée par une plaque métallique (103) et/ou une plaque de fond (142).

**3.** Dispositif RFID (50) selon la revendication 2,
**caractérisé en ce que**
la zone métallique (4) fait partie d'une structure de support (103, 102) sur laquelle passe le chemin de transport (2), l'unité d'émission et/ou de réception RFID étant disposée sous la zone métallique (4).

**4.** Dispositif RFID (50) selon l'une des revendications précédentes,
**caractérisé en ce que**
la zone de passage de signal (112) présente au moins une fente (114) dans la zone métallique.

**5.** Dispositif RFID (50) selon la revendication 5,
**caractérisé en ce que**
la zone de passage de signal (112) présente une combinaison de fentes à partir d'une pluralité de fentes (114).

**6.** Dispositif RFID (50) selon la revendication 5,
**caractérisé en ce que**
la combinaison de fentes (116) présente un nombre impair de fentes (114) et de préférence trois fentes (114).

**7.** Dispositif RFID (50) selon l'une des revendications 4 à 6,
**caractérisé en ce que**

l'au moins une fente (114) présente une longueur de fente (l) qui s'étend dans la direction longitudinale et est inférieure à la moitié de la longueur d'onde des signaux RFID de l'unité d'émission et/ou de réception RFID (19).

**8.** Dispositif RFID (50) selon l'une des revendications 4 à 7,
**caractérisé en ce que**
ladite au moins une fente (114) a une longueur de fente d'environ 100 mm à environ 180 mm et de préférence une largeur de fente d'environ 1 mm à environ 20 mm.

**9.** Dispositif RFID (50) selon l'une des revendications 4 à 8,
**caractérisé en ce que**
ladite au moins une fente (114) est remplie d'un matériau diélectrique.

**10.** Dispositif RFID (50) selon l'une des revendications précédentes,
**caractérisé en ce**
**qu'**une antenne RFID (124), en particulier une antenne patch (162) ou une antenne dipôle (164), est disposée à une distance prédéterminée de la zone métallique (4) et en chevauchement avec la zone de passage de signal (112) au moyen d'un dispositif de fixation (122) sur le côté de la zone métallique (4) qui doit être détourné du chemin de transport (2).

**11.** Dispositif RFID (50) selon la revendication 10 et selon l'une quelconque des revendications 4 à 9,
**caractérisé en ce que**
l'antenne dipôle (164) est disposée sensiblement transversalement par rapport à l'au moins une fente (114).

**12.** Dispositif RFID (50) selon l'une des revendications précédentes,
**caractérisé en ce que**
la zone de passage de signal (112) est renforcée avec un élément de renforcement (121).

**13.** Dispositif RFID (50) selon la revendication 12,
**caractérisé en ce que**
l'élément de renforcement (121) présente un élément de plaque métallique qui est fixé, en particulier soudé, sur la zone métallique du côté à détourner du chemin de transport et présente une combinaison de fentes correspondant à la combinaison de fentes (116) de la zone métallique (4).

**14.** Dispositif RFID (50) selon l'une des revendications précédentes,
**caractérisé en ce que**
la zone métallique (4) est conçue comme plancher ou comme partie d'un plancher du chemin de transport (2) et en particulier comme chemin carrossable (5) pour véhicules (108), en particulier chariots de manutention.

**15.** Pont de chargement ou rampe de chargement, **caractérisée par** un dispositif RFID selon l'une des revendications précédentes, la rampe de chargement ou le pont de chargement, qui est au moins partiellement en métal, formant ou comportant la zone métallique (4).

FIG 1
106
3
1
110
108
2,5
104
102
100
4
112

FIG 2
4
102
112
114
116
116
116
116

FIG 3
102
118
114
4
116

ERSATZBLATT (REGEL 26)

FIG 4

120
4
102
118
121
121a
142
124
112,114
122
19
102
126,128,130

FIG 5

108
132
140

FIG 6
150
144
146
152
148
154
152
152
102
140
112,114
142
19
124

FIG 7
1
154
100
5
140
108
102
4
142
2
112,114
19
124

FIG 8
112
114
116
b
l

FIG 9

114
160
114
d
b
l
116
112

FIG 10
114
160
114
160
114
d
b
l
116
112

FIG 11
114
160
114
160
114
160
114
d
b
l
116
112

FIG 12
114
160
114
160
114
160
114
160
114
d
116
b
112
l

FIG 13
162
124

FIG 14
124
164

FIG 15

B
166
h
172
4
102
142
112
19
114,116

FIG 16

126
142
4
102
120
124a
124b
124c
12
19

FIG 17

121
112
114
170
168
170
164

FIG 18

154
140
108
103
172
114
4
142
171
19
124
120

FIG 19

114
121
142
120
121a
4
112
124
164
170
116
168
122

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102009006977 A1
- US 7605688 B
- EP 1379463 A1
- EP 1308883 A1
- US 20060158334 A1


### In der Beschreibung aufgeführte Nicht-Patentliteratur


- **LENZBAUER, S.** *RFID-Anwendungen in der Logistik, Diplomarbeit an der Wirtschaftuniversität Wien, Schriftenreihe des Instituts für Transportwirtschaft und Logistik,* 2007
- Physik. Huygens'schen Prinzip. Allgemein ist das Huygens'sche Prinzip beispielsweise in Gerthsen, Kneser, Vogel. Springer Verlag, 1977